# NEUE EUROPÄISCHE PATENTSCHRIFT

(11) **EP 1 474 615 B2**
(45) Veröffentlichungstag und Bekanntmachung des Hinweises auf die Entscheidung über den Einspruch: **19.10.2011**
(45) Hinweis auf die Patenterteilung: 02.11.2006
(21) Anmeldenummer: 03704612.5
(22) Anmeldetag: 13.02.2003
(51) Int. Cl.: F16C 11/06, B60G 7/00

(54) **ELASTOMERGELENK**
ELASTOMER ARTICULATION
ARTICULATION ELASTOMERE

(30) Priorität: 14.02.2002 DE 20202241 U
(43) Veröffentlichungstag der Anmeldung: 10.11.2004
(73) Patentinhaber: TRW Automotive GmbH, 73553 Alfdorf (DE)
(72) Erfinder: ERDOGAN, Cengiz, 47608 Geldern (DE)
(74) Vertreter: Prinz & Partner
(86) Internationale Anmeldenummer: PCT/EP2003/001442
(87) Internationale Veröffentlichungsnummer: WO 2003/069172

(56) Entgegenhaltungen:
- CH-A- 338 658
- DE-A- 3 715 360
- DE-A- 3 906 079
- DE-A- 3 936 775
- DE-A- 10 006 178
- DE-T2- 69 006 959

## Beschreibung

Die Erfindung betrifft ein Elastomergelenk, insbesondere für Fahrwerksteile von Kraftfahrzeugen, mit einem Gehäuse, einem in dem Gehäuse angeordneten Elastomerkörper und einem Gelenkkörper, der in dem Elastomerkörper angeordnet ist, wobei ein Freiraum zwischen einer zylindrischen Innenwand des Gehäuses und dem Elastomerkörper vorhanden ist, wenn der Elastomerkörper sich vor der Montage in einem spannungslosen Zustand befindet, und dieser Freiraum ausgefüllt ist, wenn der Elastomerkörper im Gehäuse montiert ist.

Elastomergelenke sind wartungsfrei, unempfindlich gegenüber äußeren Umwelteinflüssen und werden im Automobilbau zur präzisen Achsführung sowie zur Erhöhung des Fahrkomforts eingesetzt, beispielsweise bei Omnibussen. Der Elastomerkörper des Gelenkes wird dabei nach dem Stand der Technik zwischen zwei Stützringen vorgespannt, wobei sich im allgemeinen eine radiale Federkennung ergibt, die den Nachteil aufweist, daß störende Frequenzen in Form von Vibrationen und Geräuschen aus dem Antriebsstrang auf die Fahrgastzelle übertragen werden können.

Aus der Offenlegungsschrift DE 3 715 360 ist ein Gelenk der eingangs genannten Art bekannt, bei dem der hülsenförmige Elastomerkörper zwischen zwei Stützringen vorgespannt ist und bei dem an der Innenfläche des auf seiner Innenfläche zylindrischen Gehäuses in einer mittleren Zone Materialausnehmungen vorgesehen sind, so daß ein Raum geschaffen ist, in den hinein der Elastomerkörper ausweichen kann, was die Vorspannung des Elastomerkörpers in diesem Bereich reduziert. Auf diese Weise ergibt sich eine mit steigender Belastung progressive Federkennung des Gelenkes, wodurch eine bessere Vibrations- und Geräuschdämpfung erreicht wird.

Allerdings bedingen diese Materialausnehmungen an der Innenfläche des Gehäuses ein relativ aufwendiges Fertigungsverfahren im Vergleich zur Herstellung eines Gehäuses mit einer glatten zylindrischen Innenwand. Weiterhin zeigt sich eine stark reduzierte Lebensdauer eines solchen Gelenks durch höheren Abrieb des Elastomers bei größeren Winkelauslenkungen des Zapfens.

Die Aufgabe der Erfindung besteht darin, ein Elastomergelenk der eingangs genannten Art zu schaffen, daß trotz einer progressiven Federkennung kostengünstig herstellbar ist, wobei es gegenüber den bisher bekannten Ausführungen eine reduzierte Torsionssteifigkeit sowie eine höhere Lebensdauer aufweisen soll.

Zu diesem Zweck ist gemäß der Erfindung ein Elastomergelenk der eingangs genannten Art so ausgebildet, daß ein Distanzelement vorgesehen ist, das an einem axialen Ende des Elastomerkörpers zwischen diesem und der Innenwand angeordnet ist. Auf diese Weise wird auch ohne Materialausnehmungen an der zylindrischen Innenfläche des Gehäuses ein Freiraum im Inneren des Gelenkes zwischen dem Elastomerkörper und der Innenwand des Gehäuses erzielt, durch den eine Verringerung der Vorspannung des Elastomerkörpers erreicht werden kann.

Das Distanzelement kann dabei direkt an dem Stützring angeordnet und einstückig mit diesem ausgebildet sein oder als ein Einlegeteil an diesen angrenzen. Bei einer einstückigen Ausgestaltung ist das Distanzelement vorzugsweise als umlaufender Kragen am Stützring ausgebildet, wobei der Kragen mit einer Fase versehen sein kann, womit für den Elastomerkörper ein sanfter Übergang zur Innenwand des Gehäuses vorgesehen wird. So wird die Gefahr der Rißbildung im Elastomerkörper an einer Kante des Distanzelementes beim Übergang zum Gehäuse reduziert. Das Gehäuse selbst weist im Bereich des Elastomerkörpers eine glatte zylindrische Innenwand auf.

In einer weiteren Ausführungsform wird an einem Stützring ein Einlegeteil mit L-förmigem Querschnitt angeordnet, wobei das Einlegeteil den Stützring am äußeren Rand umgreift. Mit einem angrenzend an das Distanzelement angeordneten Übergangselement, das einen keilförmigen Querschnitt aufweist, kann auch hier für den Elastomerkörper ein sanfter Übergang zur Innenwand des Gehäuses vorgesehen werden. Dieses Übergangselement läßt sich in einfacher Weise aus Kunststoff ausführen.

Der Stützring mit daran angeordnetem Distanzelement kann durch einen an das Distanzelement angrenzenden Federring, der bei der Montage in eine Nut, die in der Innenwand des Gehäuses vorgesehen ist, eingeführt wird, gesichert und gehalten werden.

Je nach Anwendungsfall und gewünschter Federkennung kann das Distanzelement an einem oder auch an beiden axialen Enden des Elastomerkörpers vorgesehen werden kann.

Vorteilhafte Ausgestaltungen der Erfindung ergeben sich aus den Unteransprüchen.

Die Erfindung wird nachfolgend unter Bezugnahme auf verschiedene Ausführungsformen beschrieben, die in den beigefügten Zeichnungen dargestellt sind. In diesen zeigen:
- Figur 1 in einer geschnittenen Perspektivansicht ein Elastomergelenk nach dem Stand der Technik;
- Figur 2 in einer geschnittenen Perspektivansicht ein erfindungsgemäßes Elastomergelenk in einer ersten Ausführungsform, bei dem das Distanzelement mit einem Stützring einstückig ausgebildet ist;
- Figur 3 in einer geschnittenen Detailansicht ein erfindungsgemäßes Elastomergelenk gemäß Figur 2;
- Figur 4 in einer geschnittenen Perspektivansicht ein erfindungsgemäßes Elastomergelenk in einer zweiten Ausführungsform, in der das Distanzelement als ein Einlegeteil mit L-förmigem Querschnitt ausgebildet ist ;
- Figur 5 in einer geschnittenen Detailansicht ein erfindungsgemäßes Elastomergelenk gemäß Figur 4.

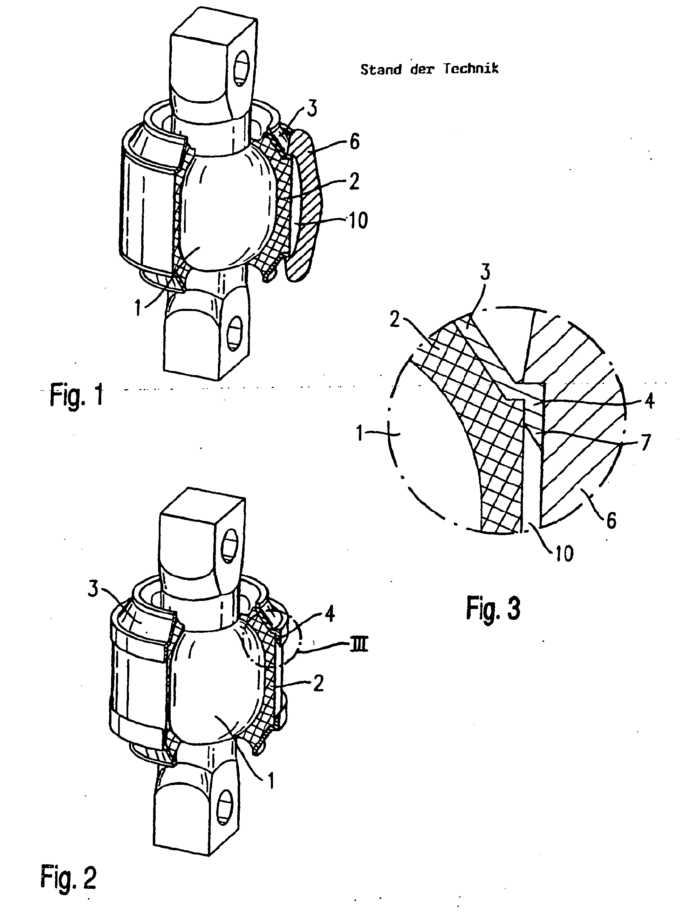

Figur 1 zeigt ein Elastomergelenk nach dem Stand der Technik, wie es bislang insbesondere für Fahrwerksteile von Kraftfahrzeugen eingesetzt wurde, insbesondere zur Verbindung von Fahrwerksteilen mit Aufhängungspunkten der Fahrzeugkarosserie. Es besteht im wesentlichen aus einem Gehäuse 6, das hier nur schematisch angedeutet ist. Das Gehäuse 6 weist eine Innenöffnung auf, deren Durchmesser an den axialen Enden kleiner ist als in der Mitte zwischen den axialen Enden; die Innenwand des Gehäuses 6 ist also tonnenförmig ausgebildet. Im Inneren des Gehäuses 6 ist ein allgemein hülsenförmiger Elastomerkörper 2 angeordnet, in welchem wiederum ein Gelenkkörper 1 angeordnet ist. In Figur 1 ist der Elastomerkörper 2 in seinem spannungslosen Zustand gezeigt, in welchem seine Außenwand etwa geradlinig verläuft. Auf diese Weise ergibt sich ein theoretischer Freiraum 10 zwischen der Außenwand des Elastomerkörpers 2 und der tonnenförmig verlaufenden Innenwand des Gehäuses 6. Bei der Montage wird der Elastomerkörper 2 aber zwischen zwei Stützringen 3 vorgespannt, so daß er nach der Montage des Gelenkes glatt an der Innenwand des Gehäuses 6 anliegt. In diesem Zustand des Elastomerkörpers 2 ergibt sich eine progressive Federkennung des Gelenkes.

In den Figuren 2 und 3 ist ein erfindungsgemäßes Elastomergelenk gemäß einer ersten Ausführungsform gezeigt. Im Unterschied zum Elastomergelenk gemäß dem Stand der Technik ist an dem Stützring 3 ein Distanzelement 4 ausgebildet. Das Distanzelement 4 ist bei dieser Ausführungsform als umlaufender Kragen einstückig mit dem Stützring 3 ausgebildet. Auf diese Weise kann die Innenwand des Gehäuses 6 zylindrisch ausgeführt werden, also mit konstantem Durchmesser, während gleichzeitig der Freiraum 10 zwischen der Innenwand des Gehäuses 6 und dem Elastomerkörper 2 gebildet ist. Auch hier kann der Elastomerkörper 2 bei der Montage so vorgespannt werden, daß der Freiraum 10 vollständig ausgefüllt ist durch Material, das in diesen Freiraum hinein ausgewichen ist. Hierdurch ergibt sich eine progressive Federkennung des Gelenkes und damit eine Dämpfung kleiner Amplituden, wodurch z. B. bei Achsstreben ein verbessertes Übertragungsverhalten mit verringerter Geräuschentwicklung und Vibration bei gleichzeitiger präziser Achsführung und einer harten Kennung unter hohen Belastungen erreicht wird.

Am freien, der Mitte des Gehäuses 6 zugewandten Ende des Distanzelements 4 ist eine Fase 7 vorgesehen, so daß für den vorgespannten Elastomerkörper 2 ein sanfter Übergang zur zylindrischen Innenwand des Gehäuses 6 erzielt wird. Das Distanzelement 4 schafft somit die Möglichkeit einer radialen Ausdehnung des Elastomerkörpers 2 in einem mittleren Bereich, wodurch die Vorspannung des Elastomerkörpers 2 in diesem Bereich herabgesetzt wird.

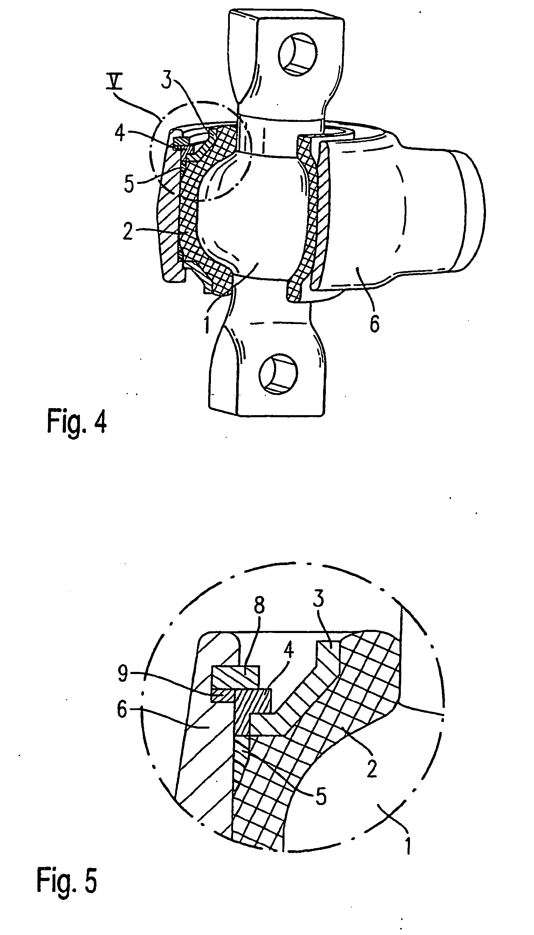

In den Figuren 4 und 5 ist ein erfindungsgemäßes Elastomergelenk gemäß einer zweiten Ausführungsform gezeigt. Bei dieser Ausführungsform ist das Distanzelement 4 ein Einlegeteil mit L-förmigen Querschnitt, das den Stützring 3 umgreift. Angrenzend an das Distanzelement 4 ist ein Übergangselement 5 mit einem keilförmigen Querschnitt angeordnet. Durch dieses Übergangselement 5 wird ein sanfter Übergang des Elastomerkörpers 2 zur zylindrischen Innenwand des Gehäuses 6 erzielt. Auch hier ergibt sich somit eine partielle Verringerung der Vorspannung und damit eine progressive Kennung des Gelenkes, ohne daß dazu an der Innenfläche des innen zylindrischen Gehäuses 6 in einer mittleren Zone Materialausnehmungen notwendig sind.

Das Übergangselement 5 kann aus Kunststoff ausgeführt sein, während das Distanzelement 4 aus Festigkeitsgründen aus Metall ausgeführt ist.

Das Gehäuse 6 weist eine umlaufende Nut 9 auf, in die ein Federring 8 eingreift, der den Stützring 3 samt Distanzelement 4 sichert und hält. Der Federring 8 liegt am Distanzelement 4 an und hält den Elastomerkörper 2 in einer Vorspannung im Gehäuse 6.

## Patentansprüche

1. Elastomergelenk, insbesondere für Fahrwerksteile von Kraftfahrzeugen, mit einem Gehäuse (6), einem in dem Gehäuse (6) angeordneten Elastomerkörper (2) und einem Gelenkkörper (1), der in dem Elastomerkörper (2) angeordnet ist, wobei ein Freiraum zwischen einer zylindrischen Innenwand des Gehäuses (6) und dem Elastomerkörper (2) vorhanden ist, wenn der Elastomerkörper (2) sich vor der Montage in einem spannungslosen Zustand befindet, und dieser Freiraum ausgefüllt ist, wenn der Elastomerkörper (2) im Gehäuse montiert ist, **dadurch gekennzeichnet, daß** ein Distanzelement (4) vorgesehen ist, das an einem axialen Ende des Elastomerkörpers (2) zwischen diesem und der Innenwand angeordnet ist.

2. Elastomergelenk nach Anspruch 1, **dadurch gekennzeichnet, daß** an dem Elastomerkörper (2) ein Stützring (3) angeordnet ist und daß das Distanzelement (4) an dem Stützring angeordnet ist.

3. Elastomergelenk nach Anspruch 2, **dadurch gekennzeichnet, daß** das Distanzelement (4) und der Stützring (3) einstückig sind.

4. Elastomergelenk nach Anspruch 3, **dadurch gekennzeichnet, daß** das Distanzelement (4) als umlaufender Kragen am Stützring (3) ausgebildet ist.

5. Elastomergelenk nach Anspruch 4, **dadurch gekennzeichnet, daß** der Kragen mit einer Fase (7) versehen ist, so daß ein sanfter Übergang zur Innenwand des Gehäuses (6) erzielt ist.

6. Elastomergelenk nach Anspruch 1, **dadurch gekennzeichnet, daß** das Distanzelement (4) ein Einlegeteil mit L-förmigem Querschnitt ist, das den Stützring (3) umgreift.

7. Elastomergelenk nach Anspruch 6, **dadurch gekennzeichnet, daß** angrenzend an das Distanzelement (4) ein Übergangselement (5) angeordnet ist, das einen keilförmigen Querschnitt hat.

8. Elastomergelenk nach Anspruch 6 oder Anspruch 7, **dadurch gekennzeichnet, daß** das Übergangselement (5) aus Kunststoff besteht.

9. Elastomergelenk nach Anspruch 6 oder Anspruch 7, **dadurch gekennzeichnet, daß** das Distanzelement (4) an einen in eine Nut (9) des Gehäuses (6) eingreifenden Federring (8) angrenzt.

## Claims

1. An elastomer joint, in particular for chassis parts of motor vehicles, comprising a housing (6), an elastomer body (2) arranged in the housing (6), and a joint body (1) that is arranged in the elastomer body (2), a free space existing between a cylindrical inner wall of the housing (6) and the elastomer body (2) when the elastomer body (2) is in a tension-free state prior to assembly, and this free space being filled when the elastomer body (2) is assembled in the housing, **characterized in that** a spacer (4) is provided that is arranged at an axial end of the elastomer body (2) between the latter and the inner wall.

2. The elastomer joint according to Claim 1, **characterized in that** a support ring (3) is arranged at the elastomer body (2), and that the spacer (4) is arranged at the support ring.

3. The elastomer joint according to Claim 2, **characterized in that** the spacer (4) and the support ring (3) are one piece.

4. The elastomer joint according to Claim 3, **characterized in that** the spacer (4) is designed as an encircling collar on the support ring (3).

5. The elastomer joint according to Claim 4, **characterized in that** the collar is provided with a chamfer (7) so that a gentle transition is achieved to the inner wall of the housing (6).

6. The elastomer joint according to Claim 1, **characterized in that** the spacer (4) is an insert part having an L-shaped cross-section that encompasses the support ring (3).

7. The elastomer joint according to Claim 6, **characterized in that**, adjacent to the spacer (4), a transition element (5) is arranged that has a wedge-shaped cross-section.

8. The elastomer joint according to Claim 6 or Claim 7, **characterized in that** the transition element (5) is made of plastic.

9. The elastomer joint according to Claim 6 or Claim 7, **characterized in that** the spacer (4) is adjacent to a split washer (8) that engages in a groove (9) of the housing (6).

## Revendications

1. Articulation élastomère, en particulier pour des parties de châssis de véhicules automobiles, comportant un boîtier (6), un corps élastomère (2) agencé dans le boîtier (6), et un corps d'articulation (1) qui est agencé dans le corps élastomère (2), un espace libre existant entre une paroi intérieure cylindrique du boîtier (6) et le corps élastomère (2) lorsque le corps élastomère (2) se trouve dans un état de détente et cet espace libre étant rempli lorsque le corps élastomère (2) est monté dans le boîtier, **caractérisée en ce qu'**il est prévu un élément d'écartement (4) qui est agencé à une extrémité axiale du corps élastomère (2) entre celui-ci et la paroi intérieure.

2. Articulation élastomère selon la revendication 1, **caractérisée en ce que** sur le corps élastomère (2) est agencée une bague d'appui (3) et **en ce que** l'élément d'écartement (4) est agencé sur la bague d'appui (3).

3. Articulation élastomère selon la revendication 2, **caractérisée en ce que** l'élément d'écartement (4) et la bague d'appui (3) sont d'un seul tenant.

4. Articulation élastomère selon la revendication 3, **caractérisée en ce que** l'élément d'écartement (4) est réalisé sur la bague d'appui (3) sous forme de collerette périphérique.

5. Articulation élastomère selon la revendication 4, **caractérisée en ce que** la collerette est pourvue d'un chanfrein (7), de telle sorte qu'une transition douce est obtenue vers la paroi intérieure du boîtier (6).

6. Articulation élastomère selon la revendication 1, **caractérisée en ce que** l'élément d'écartement (4) est une pièce d'insert avec section transversale en forme de L qui entoure la bague d'appui (3).

7. Articulation élastomère selon la revendication 6, **caractérisée en ce que** de manière adjacente à l'élément d'écartement (4) est agencé un élément de transition (5) qui a une section transversale en forme de coin.

8. Articulation élastomère selon la revendication 6 ou la revendication 7, **caractérisée en ce que** l'élément de transition (5) est en matière plastique.

9. Articulation élastomère selon la revendication 6 ou la revendication 7, **caractérisée en ce que** l'élément d'écartement (4) est adjacent à une rondelle élastique (9) s'engageant dans une gorge (9) du boîtier (6).
